# EUROPÄISCHE PATENTSCHRIFT

(11) **EP 1 752 030 B1**
(45) Veröffentlichungstag und Bekanntmachung des Hinweises auf die Patenterteilung: **25.06.2008**
(21) Anmeldenummer: 06016055.3
(22) Anmeldetag: 02.08.2006
(51) Int. Cl.: A01C 7/08

(54) **Pneumatische Verteilmaschine**
Pneumatic distributor
Distributeur pneumatique

(30) Priorität: 08.08.2005 DE 102005037813
(43) Veröffentlichungstag der Anmeldung: 14.02.2007
(73) Patentinhaber: Amazonen-Werke H. Dreyer GmbH & Co. KG, 49205 Hasbergen (DE)
(72) Erfinder: Feldhaus, Werner, 27801 Dötlingen/Geveshausen (DE); Häfker, Gerd, 27305 Süstedt (DE); Brüggemann, Klaus, 27777 Ganderkesee (DE)

(56) Entgegenhaltungen:
- EP-A1- 0 873 675
- EP-A2- 0 168 906
- FR-A- 2 436 726
- US-A- 4 717 289
- US-A- 6 116 284

## Beschreibung

Die Erfindung betrifft eine pneumatische Verteilmaschine gemäß des Oberbegriffes des Patentanspruches 1.

Eine derartige Verteilmaschine ist beispielsweise in der DE 20 2004 002 923 U1, DE 196 18 068 A1, DE 197 17 212 A1, DE 197 17 214 A1 beschrieben. Mittels des senkrecht stehenden Wellrohrs soll der Materialluftstrom vor Erreichen des Verteilers vergleichmäßigt werden, um über den Verteiler das auszubringende Gut gleichmäßig auf die von dem Verteiler abgehenden Leitungen zu verteilen. Insbesondere bei großen Durchsatzmengen und langen Förderleitungen, wie sie heute bei Großflächendrillmaschinen üblich sind, hat sich gezeigt, dass es nicht immer ausreichend ist, dass sich teilweise in den langen Verteilerleitungen entmischende Gut im senkrecht stehenden Steigrohr wieder zu vergleichmäßigen, dies trifft insbesondere auf große Fördermengen innerhalb der Förderleitung zu.

Der Erfindung liegt die Aufgabe zugrunde, mit einfachen Maßnahmen bei großen Fördermengen eine gleichmäßige Verteilung des Gutes im Verteiler auf die abgehenden Ausbringleitungen zu erreichen.

Diese Aufgabe wird erfindungsgemäß durch das kennzeichnende Merkmal des Anspruches 1 gelöst. Durch diesen in einfacher Weise ausgebildeten wellartigen Bereich der Förderleitung im waagerechten verlaufenden Bereich vor dem Krümmer wird das Materialluftgemisch innerhalb der Förderleitung vor dem Krümmer und der senkrecht stehenden Steigleitung durcheinander gewirbelt und hierdurch wird eine Vergleichmäßigung erzielt.

Um eine möglichst hohe Vergleichmäßigung durch den Spiralschlauch zu erreichen, ist es wichtig, dass der Spiralschlauch zumindest annähernd geradlinig verlaufend verlegt ist.

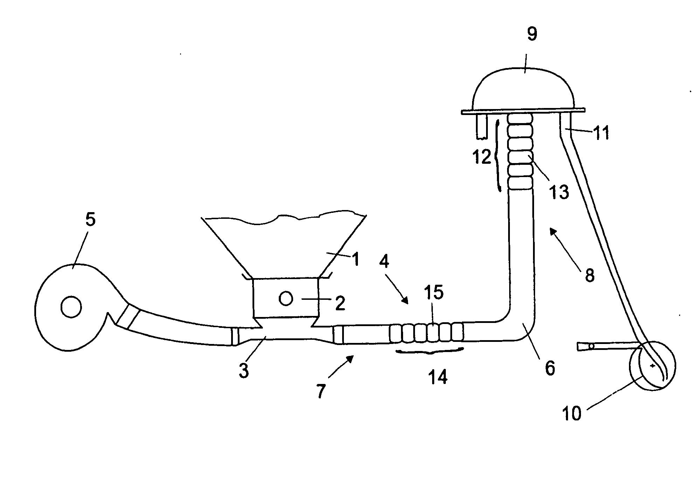

Weitere Einzelheiten der Erfindung sind der Beispielsbeschreibung und den Zeichnungen zu entnehmen. Hierbei zeigt die Zeichnung eine Prinzipdarstellung der Verteilmaschine zum Verteilen von körnigem Gut.

Die als Sämaschine ausgebildete Verteilmaschine weist den Vorratsbehälter 1 auf, an den sich das Dosierorgan 2 anschließt. Das sich in dem Vorratsbehälter 1 befindliche Gut, wie Saatgut oder Düngemittel, wird über das Dosierorgan 2 in die unterhalb des Dosierorgans 2 angeordnete Venturischleuse 3 eingespeist, die Bestandteil der pneumatischen Förderleitung 4 ist. Die Venturischleuse 3 ist auf der einen Seite an ein von einer Kraftwelle angetriebenes Gebläse 5 angeschlossen, welches den Luftstrom zur Förderung des Materialluftgemisches innerhalb der Förderleitung 4 erzeugt. Auf der anderen Seite der Venturischleuse 3 ist die eigentliche Förderleitung 4 angeschlossen. Die Förderleitung 4 weist den 90° Krümmer 6 auf, der den liegenden bzw. horizontalen Teil 7 der Förderleitung 4 in das senkrecht stehende Steigrohr 8 überführt. Am Ende des Steigrohres 8 ist der Verteiler 9 mit den von dem Verteiler 9 abgehenden zu den beispielsweise als Säschare ausgebildeten Ausbringorganen 10 führenden Ausbringleitungen 11 angeschlossen. Das Steigrohr 8 weist in dem Bereich vor dem Verteiler 9 ein Wellrohr 13 zur Vergleichmäßigung des durch das Steigrohr 8 geführten Materialluftstromes vor Erreichen des Verteilers 9 auf. Unmittelbar vor dem Krümmer 6 ist ein zumindest annähernd horizontal verlaufender Bereich 14 der pneumatischen Förderleitung 4 angeordnet. Dieser Bereich 14 der Förderleitung 4 ist wellartig ausgebildet. Dieser wellartig verlaufende Bereich 14 der Förderleitung 4 vor dem Krümmer 6 ist als Wellrohr 15 ausgeführt und zumindest annähernd geradlinig verlaufend verlegt. Durch dieses wellartige Teil 15 der Förderleitung 4 wird eine Vergleichmäßigung des vom Materialluftstromes erreicht, d.h. dass die körnigen Partikel innerhalb des Materialluftstromes sich über den Querschnitt der Förderleitung 4 vergleichmäßigen. Dieses ist insbesondere bei großen Fördermengen wichtig, bei dem die Vergleichmäßigung durch den wellartigen Bereich 13 des Steigrohres 8 nicht in allen Gegebenheiten ausreicht.

Der wellartige Bereich 14 der Förderleitung 4 kann auch als Spiralschlauch ausgebildet sein. Hierbei ist es wichtig, dass der Spiralschlauch zumindest annähernd geradlinig verlegt ist.

## Patentansprüche

1. Pneumatische Verteilmaschine zum Verteilen von körnigem Gut, insbesondere von Saatgut und Düngemitteln, mit einem Vorratsbehälter (1) für das zu verteilende Gut, einem damit in Verbindung stehenden Dosierorgan (2) und einem Verteiler (9), der mit dem Dosierorgan (2) über eine pneumatische Förderleitung (4) verbunden ist, die in ihrem Verlauf einen 90° Krümmer (6), vor dem Krümmer (6) einen zumindest waagerechten Verlauf (7) und nach dem Krümmer (6) ein senkrecht stehendes und zumindest teilweise als Wellrohr ausgebildetes Steigrohr (8), das an dem Verteiler (9) ausmündet, aufweist, wobei der Bereich (15) der Förderleitung (4) im waagerechten Bereich vor dem Krümmer (6) zumindest teilweise wellartig ausgebildet ist, **dadurch gekennzeichnet, dass** der wellartige Teil (15) der Förderleitung (4) vor dem Krümmer (6) als Spiralschlauch ausgebildet ist.

2. Verteilmaschine nach Anspruch 1, **dadurch gekennzeichnet, dass** der Spiralschlauch zumindest annähernd geradlinig verlaufend verlegt ist.

## Claims

1. Pneumatic distributing machine for distributing granular material, more especially seeds and fertilisers, said machine having a hopper (1) for the material to be distributed, a metering member (2) which is in connection with said hopper, and a distributor (9) which is connected to the metering member (2) via a pneumatic conveying line (4), which has a 90° bend (6) in respect of its configuration, has an at least horizontal configuration (7) upstream of the bend (6) and, downstream of the bend (6), has a vertical feed pipe (B), which is at least partially in the form of an undulatory pipe and terminates at the distributor (9), the region (15) of the conveying line (4) being at least partially undulatory in the horizontal region upstream of the bend (6), **characterised in that** the undulatory part (15) of the conveying line (4) upstream of the bend (6) is in the form of a spiral tube.

2. Distributing machine according to claim 1, **characterised in that** the spiral tube is laid so as to extend at least approximately rectilinearly.

## Revendications

1. Machine distributrice pneumatique pour distribuer des produits en forme de grains, notamment des semences et des engrais, comportant un réservoir d'alimentation (1) pour le produit à distribuer, un organe de dosage (2) coopérant avec le réservoir et un distributeur (9) relié à l'organe de dosage (2) par une conduite de transfert pneumatique (4) qui comporte dans son tracé un coude à 90° (6), avec au moins un tracé horizontal (7) en amont du coude (6) et un tube montant (8) vertical est au moins en partie réalisé sous forme de tube ondulé en aval du coude (6), et cette conduite débouche au niveau du distributeur (9),
la région (15) de la conduite de transfert (4) dans la région horizontale avant le coude (6) étant au moins en partie de forme ondulée,
**caractérisé en ce que**
la partie de forme ondulée (15) de la conduite de transfert (4), en avant du coude (6), est un tube hélicoïdal.

2. Machine distributrice pneumatique selon la revendication 1,
**caractérisée en ce que**
le tuyau en hélice est disposé au moins sensiblement suivant une ligne droite.
